# EUROPEAN PATENT APPLICATION

(11) **EP 1 712 275 A2**
(43) Date of publication of application: **18.10.2006**
(21) Application number: 06112521.7
(22) Date of filing: 12.04.2006
(51) Int. Cl.: B01J 19/24, C01B 3/38, H01M 8/06

(54) **Plate-type reactor body for a fuel cell system**

(30) Priority: 12.04.2005 KR 2005030268; 24.06.2005 KR 2005054828
(71) Applicant: Samsung SDI Co., Ltd., Suwon-si Gyeonggi-do (KR)
(72) Inventor: LEE, Dong-Uk, Kyunggi-do (KR); KIM, Ju-Yong, Kyunggi-do (KR); PARK, Zin, Kyunggi-do (KR); KONG, Sang-Jun, Kyunggi-do (KR); SUH, Dong-Myung, Kyunggi-do (KR)
(74) Representative: Hengelhaupt, Jürgen

(57) **Abstract**

The invention relates to a plate-type reactor body for a fuel cell system. The reactor body comprises (i) an inner space containing a catalyst layer including a catalyst for promoting a reforming reaction, (ii) a plurality of plates, and (iii) a bonding portion between the plates. The reactor body is characterized in that the reactor body further comprises an aperture adapted for insertion of the catalyst and a finishing unit adapted for finishing and sealing the aperture.

## Description

### BACKGROUND OF THE INVENTION

### (a) Field of the Invention

The present invention relates to a plate-type reactor body for a fuel cell system.

### (b) Description of the Related Art

As well known, a fuel cell is an electricity generating system for generating electric energy by using a fuel (i.e. methanol, ethanol, and natural gas) and oxygen.

A recently developed polymer electrolyte membrane fuel cell (PEMFC) has an excellent output characteristic, a low operation temperature, and fast starting and response characteristics in comparison to other fuel cells. In addition, such a fuel cell advantageously has a wide range of applications including a mobile power source for vehicles, a distributed power source for home or buildings, and a small-sized power source for electronic apparatuses.

The PEMFC system includes a stack, a reformer, a fuel tank, and the like. The stack constitutes a main body of the fuel cell which generates the electric energy through a reaction between hydrogen and oxygen, and the fuel pump supplies the fuel in the fuel tank to the reformer. The reformer reforms the fuel to generate hydrogen and supplies the hydrogen to the stack.

In the fuel cell system, the reformer generates hydrogen from the fuel through a chemical catalyst reaction by thermal energy. Thus, the reformer may include a plurality of fuel processing units which generate the thermal energy by using the fuel, generate hydrogen through a reforming reaction of the fuel by using the thermal energy, and decrease a concentration of carbon monoxide contained in the hydrogen.

However, in the conventional reformer, the container-type fuel processing units are disposed in a distributed manner. For this reason, a thermal exchange is not directly performed, resulting in deteriorating thermal transfer. Furthermore, there is a drawback in that the whole system is not compact.

### SUMMARY OF THE INVENTION

The present invention provides a reformer for a fuel cell system, which has a plate-type structure, maximizes thermal transfer efficiency, and reduces overall size of the system.

According to the present invention, there is provided a plate-type reactor body for a fuel cell system comprising (i) an inner space containing a catalyst layer including a catalyst for promoting a reforming reaction, (ii) a plurality of plates, and (iii) a bonding portion between the plates. The reactor body further comprises an aperture adapted for insertion of the catalyst and a finishing unit adapted for finishing and sealing the aperture.

Preferably, the finishing unit may be fixed to the plates by welding.

In addition, the plates may include a first metal plate which has a concave portion to form the inner space; and a second metal plate which covers the concave portion and comes in close contact with the first metal plate, wherein the aperture is formed by cutting a portion of a wall of the first metal plate disposed along edges of the concave portion.

In addition, the finishing unit may be formed by a block corresponding to the shape of the aperture and be inserted into the aperture to be bonded. In other words, the finishing unit is a block of corresponding shape to the shape of the aperture. Preferably, the finishing unit may be formed by a bar-shaped block.

In addition, the plates may include a first metal plate which has a plurality of channels to form the inner space, and a second metal plate which covers the plates and comes in close contact with the first metal plate. The channels are formed by a plurality of ribs disposed at one side of the first metal plate with a specific gap, and the aperture is formed by opening one lateral end of each channel.

In addition, the bonding portion may include a metal thin plate which is disposed between border surfaces of the plates. The metal thin plate is melted by heat, and bonds the plates. Preferably, the metal thin plate may be made of a material having a melting point lower than that of the plates.

In addition, the plates may be made of stainless steel or aluminum.

In addition, the catalyst layer may be formed by a pellet-shaped catalyst. The catalyst is filled inside the inner space.

According to one embodiment of the present invention, there is provided a reformer for a fuel cell system including a plate-type reactor body which has an inner space for containing a catalyst layer. The reactor body includes a plurality of plates which are separately formed, a bonding portion which is formed between the plates and fixes the plates to be integrated one another, and a finishing unit which is bonded with an aperture for a catalyst insertion and seals the aperture.

According to another aspect of the invention, there is provided a reformer including a plurality of the inventive reactor bodies according to the above description.

### BRIEF DESCRIPTION OF THE DRAWINGS

The above and other features and advantages of the present invention will become more apparent by describing in detail exemplary embodiments thereof with reference to the attached drawings in which:
Fig. 1 is a schematic block diagram illustrating a fuel cell system according to an embodiment of the present invention;
Fig. 2 is a perspective view illustrating a reformer for a fuel cell system according to an embodiment of the present invention;
Fig. 3 is a cross-sectional view the reformer of Fig. 2;
Fig. 4 is a partial exploded perspective view of the reformer of Fig. 2;
Fig. 5 is an exploded perspective view illustrating the structure of the reaction body and a manufacturing method thereof;
Fig. 6 is a schematic cross-sectional view illustrating the structure of a reformer for a fuel cell system according to another embodiment of the present invention;
Fig. 7 is a perspective view illustrating a reformer for a fuel cell system according to another embodiment of the present invention;
Fig. 8 is a partial exploded perspective view of the reformer of Fig. 7;
Fig. 9 is a cross-sectional view of the reformer of Fig. 7;
Fig. 10 is a exploded perspective view illustrating the structure of a reactor body of the reformer of Fig. 7 and a manufacturing method thereof; and
Fig. 11 is a schematic cross-sectional view illustrating the structure of a reformer for a fuel cell system according to another embodiment of the present invention.

### DETAILED DESCRIPTION

Hereinafter, exemplary embodiments of the present invention will be described in detail with reference to the attached drawings such that the present invention can be easily put into practice by those skilled in the art.

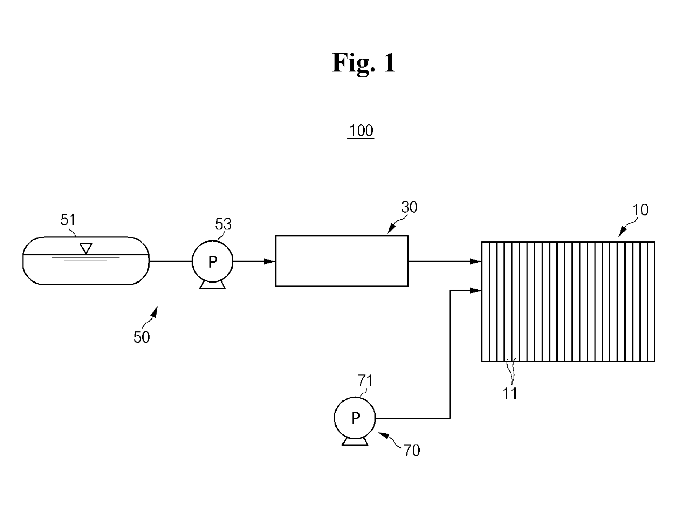

Fig. 1 is a schematic block diagram illustrating a fuel cell system according to an embodiment of the present invention.

Referring to the drawing, a fuel cell system 100 is formed in a Polymer Electrolyte Membrane Fuel Cell (PEMFC) method in which hydrogen is generated by reforming a reactant containing a fuel, thereby generating electric energy.

The fuel used for the fuel cell system 100 includes a liquid or gas fuel containing hydrogen such as methanol, ethanol, or natural gas. In the present embodiment, a liquid fuel is used.

The fuel cell system 100 includes a stack 10 for generating electric energy through a reaction of hydrogen and oxygen, a reformer 30 for generating hydrogen by reforming the reactant containing the fuel and supplying the hydrogen to the stack 10, a fuel supply unit 50 for supplying the fuel to the reformer 30, and an air supply unit 70 for supplying the oxygen to the stack 10.

The stack 10 includes a minimum unit of an electricity generator 11 for generating the electric energy. The electricity generator 11 may have a structure in which separators (referred to as "bipolar plates" in the art) are disposed in close contact with both surfaces of a membrane electrode assembly (MEA).

In the present embodiment, the stack 10 of the fuel cell system 100 may be constructed by sequentially disposing a plurality of the electricity generators 11 that is the minimum unit.

Since the stack 10 can be constructed as a stack of a general polymer electrolyte membrane fuel cell, detailed description thereon will be omitted.

In the present embodiment, the reformer 30 is composed of a fuel processing unit which changes the aforementioned reactant in a chemical manner, and ultimately reforms the fuel provided by the fuel supply unit 50, thereby generating hydrogen.

The fuel processing unit may include a reforming reaction unit which generates hydrogen through the reforming reaction of the fuel by thermal energy, an oxidation reaction unit which generates the thermal energy through an oxidation reaction of the fuel, and a carbon monoxide refining unit which reduces a concentration of the carbon monoxide contained in the hydrogen.

The fuel supply unit 50 for supplying the fuel to the reformer 30 may include a fuel tank 51 which stores the fuel and a fuel pump 53 which discharges the fuel and supplies the fuel to the reformer 30.

The air supply unit 70 may include an air pump 71 which sucks air and supplies the air to the stack 10 with a predetermined pumping pressure. Here, the air supply unit 70 is not limited to the aforementioned air pump 71, but the air supply unit 70 may include a fan having a general structure.

Hereinafter, the reformer 30 according to embodiments of the present invention will be described in detail with reference to accompanying drawings.

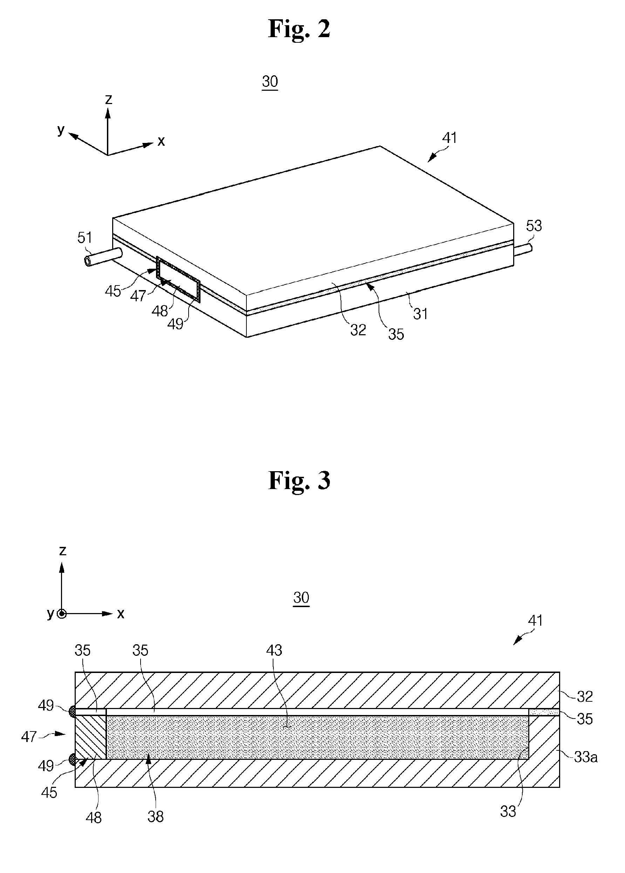

Fig. 2 is a perspective view illustrating a reformer for a fuel cell system according to an embodiment of the present invention. Fig. 3 is a cross-sectional view the reformer of Fig. 2.

Referring to the drawings, the reformer 30 includes a reforming reaction unit of the fuel processing unit which generates hydrogen through a reforming reaction of the fuel by using thermal energy.

The reformer 30 includes a plate-type reactor body 41 in which a catalyst layer 38 is formed to promote the reforming reaction.

The reactor body 41 is composed of a metal plate which has a substantial rectangular form (see Fig.2, a rectangle of which x-axis directional length is longer than y-axis directional length) and in which a specific containing space 43 (or inner space; see Fig. 3) is formed. In the containing space 43, a pellet-shaped catalyst is filled to form the aforementioned catalyst layer 38.

Specifically, the reactor body 41 includes an aperture 45 through which the catalyst is filled in the containing space 43 and a finishing unit 47 which finishes and seals the aperture 45.

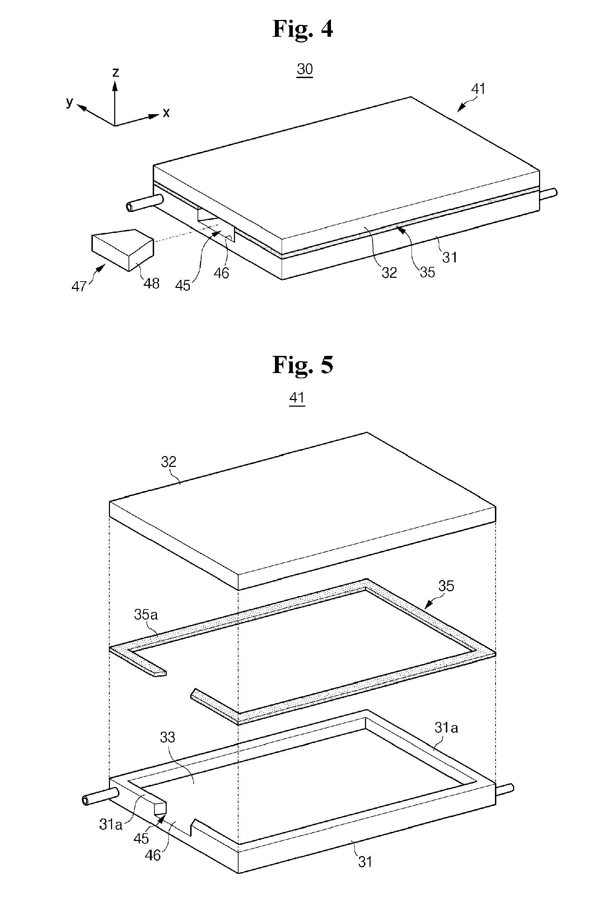

The aperture 45 is a hole connected to the containing space 43, and is formed at one side of the reactor body 41. In practice, as shown in Fig. 4, the aperture 45 is an open end 46 which is formed at one side of the reactor body 41 so that the finishing unit 47 can be inserted to be connected.

As shown in the drawings, the aperture 45 may be a single hole formed at a lateral surface of the reactor body 41, but the aperture 45 is not limited thereto. Thus, a plurality of holes may be formed at the lateral surface of the reactor body 41.

The finishing unit 47 may be formed by a finishing block 48 which is connected to a catalyst inserting hole 45. The finishing block 48 is inserted through the open end 46 of the catalyst inserting hole 45 to seal the aperture 45.

A welding portion 49 is provided in the reactor body 41 to bond the finishing block 48 with the open end 46 of the aperture 45. The welding portion 49 may be formed by laser-welding edges of the finishing block 48 and the open end 46 of the aperture 46.

While sealing a gap between the edges of the finishing block 48 and the open end 46, the welding portion 49 bonds the finishing block 48 with the reactor body 41 so as to be integrated each other.

According to the present embodiment, the catalyst layer 38 is formed by filling the pellet-shaped catalyst in the containing space 43 through the catalyst inserting hole 45 of the reactor body 41, and the finishing block 48 is inserted into the catalyst inserting hole 45. Thereafter, the finishing block 48 and the open end 46 of the catalyst inserting hole 45 are laser-welded, thereby forming the reformer 30.

Here, the reformer 30 includes an inserting portion 51 through which the fuel is inserted into the containing space 43 and a discharging portion 53 through which hydrogen generated through the reforming reaction of the fuel due to the catalyst layer 38 is discharged.

More specifically, the reactor body 41 includes a first metal plate 31 which contains the pellet-shaped catalyst, a second metal plate 32 which is disposed in close contact with the first plate, and a bonding portion 35 which bonds the first plate 31 with the second plate 32 so as to be integrated each other.

Fig. 5 is an exploded perspective view illustrating the structure of the reaction body and a manufacturing method thereof.

Referring to the drawing, in the reactor body 41, a first metal plate 31 includes a concave portion 33 corresponding to the aforementioned containing space 43 and an open end 46 corresponding to the aforementioned aperture 45.

The concave portion 33 is formed inside the first metal plate 31 in a substantial rectangular shape. The aperture 45 is formed by cutting a portion of a wall 31a of the first metal plate 31, so that an aperture 45 is connected to the concave portion 33.

Here, the aperture 45 and a finishing block 48 are bonded in a complementary manner.

A second metal plate 32 has a size corresponding to the size of the first metal plate 31, and is bonded with the first metal plate 31 by the bonding portion 35 to be described later in detail.

In practice, the first metal plate 31 and the second metal plate 32 are bonded in such a way that the second metal plate 32 comes in contact with the upper surface of the wall 31a of the first metal plate 31. Based on this bonding structure, the aperture 45 can be the catalyst inserting hole.

A bonding portion 35 is disposed and melted at a position where the first metal plate 31 and the second metal plate 32 come in close contact with each other, thereby bonding the first and second metal plates 31 and 32 to be integrated each other.

The bonding portion 35 may be composed of a metal thin plate 35a having a shape corresponding to the wall 31a of the first metal plate 31 when the metal thin plate 35a is melted/fixed by a specific heat.

Here, the metal thin plate 35a may be formed in a general metallic material of which melting point is lower than that of the first and second metal plates 31 and 32.

As described above, in the present embodiment, a plurality of metal plates are bonded to form a reformer in a brazing bonding method in which two or more pre-forms are bonded with each other by melting a specific metal thin plate or a metal film.

Hereinafter, a manufacturing method of the reformer will be described.

First, the first metal plate 31 which forms the concave portion 33 and the aperture 45, the second metal plate 32 having a size corresponding to the first metal plate 31, and the finishing block 48 having a shape corresponding to the aperture 45 are prepared.

Next, the metal thin plate 35a is placed on the wall 31a of the first metal plate 31, and the second metal plate 32 is aligned with the first metal plate 31, so that they are primarily bonded.

Next, through the brazing bonding method, the first metal plate 31 and the second metal plate 32 bonded to be integrated each other.

Specifically, with the metal thin plate 35a being disposed therebetween, the first metal plate 31 and the second metal plate 32 are pressed to come in close contact with each other, and in this state, the first metal plate 31 and the second metal plate 32 are heated to a specific temperature.

Then, the metal thin plate 35a is melted by the heat at a close contact position between the first metal plate 31 and the second metal plate 32, thereby forming the bonding portion 35 at the close contact position between the first metal plate 31 and the second metal plate 32.

Accordingly, the first and second metal plates 31 and 32 are bonded to be integrated each other by the bonding portion 35, and thus the containing space 43 formed by the concave portion 33 of the first metal plate 31 and the catalyst inserting hole formed by the aperture 45 can be included in the reactor body 41.

Thereafter, the pellet-shaped catalyst is inserted into the containing space 43 through the aperture 45 to form the catalyst layer 38. With the finishing block 48 being inserted into the aperture 45, when the edges of the finishing block 48 and the open end 46 of the aperture 45 are laser-welded to form the welding portion 49, the reformer 30 of the present embodiment is obtained.

In other words, according to the present embodiment, the first and second plates 31 and 32 are bonded using the brazing method to form the reactor body 41 having the containing space 43 and the aperture 45, the catalyst is filled in the containing space 43 through the aperture 45, and the aperture 45 is sealed, thereby constituting the reformer 30.

In the manufacturing process of the reformer 30, a catalyst layer is not necessarily formed inside a reactor body through coating. Thus, unlike in the conventional reformer in which the catalyst layer is formed through coating, the present invention can prevent the catalyst layer from separating from the reactor body. This is because the catalyst layer formed through coating is vulnerable to a thermal treatment process.

When the fuel cell system 100 using the reformer 30 operates, the fuel tank 51 is operated so that a fuel can be supplied to the containing space 43 of the reactor body 41. Then, a reforming reaction occurs due to the catalyst layer 38 while the fuel flows in the containing space 43. Thus, hydrogen is generated by the reforming reaction of the fuel in the reformer 30.

As a result, in the stack 10, according to a reaction between hydrogen supplied from the reformer 30 and oxygen supplied from the air pump 71, electric energy of a predetermined capacity can be produced.

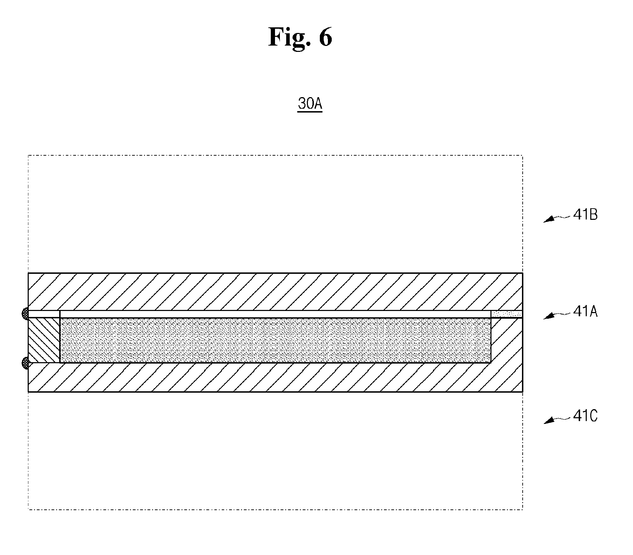

A plurality of reactor bodies may be laminated as shown in Fig. 6 to form a reformer.

Fig. 6 illustrates a reformer 30A in which three reactor bodies 41A, 41 B, and 41 C are laminated in close contact with one another.

The reactor bodies 41A, 41 B, and 41 C have the same structure in the reformer 30A. If the reactor body 41A disposed in the middle portion is a first reactor body, the reactor body 41 B disposed in the uppermost portion is a second reactor body, and the reactor body 41 C disposed in the lowermost portion is a third reactor body, the second reactor body 41 B generates thermal energy in a predetermined temperature range due to an oxidation reaction between a fuel and oxygen. The thermal energy may serve to as an oxidation reactor of a fuel processing unit included in the first reactor body 41A.

The third reactor body 41 B may be included as a carbon monoxide reducing unit (generally referred to as "PROX reactor") of the fuel processing unit which reduces a concentration of carbon monoxide through an oxidation reaction between carbon monoxide contained in hydrogen generated from the first reactor body 41A and additionally supplied oxygen.

Next, a reformer according to another embodiment of the present invention will be described.

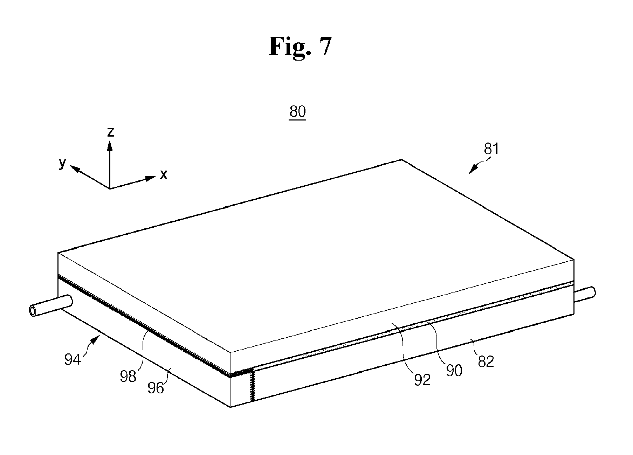

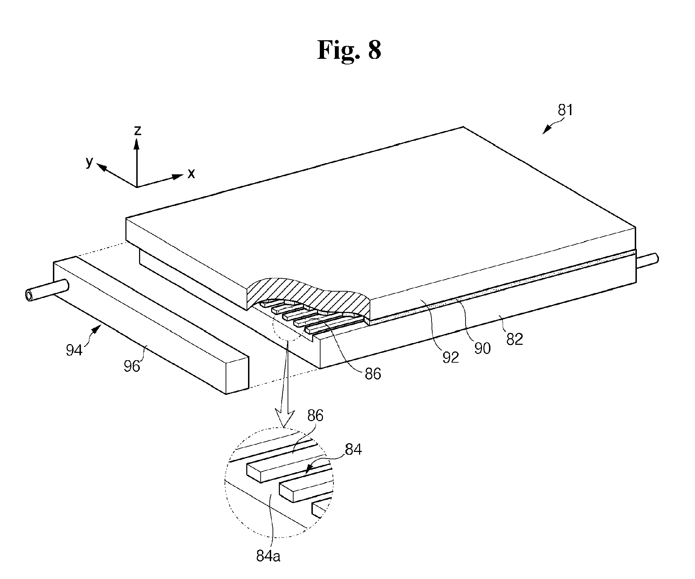

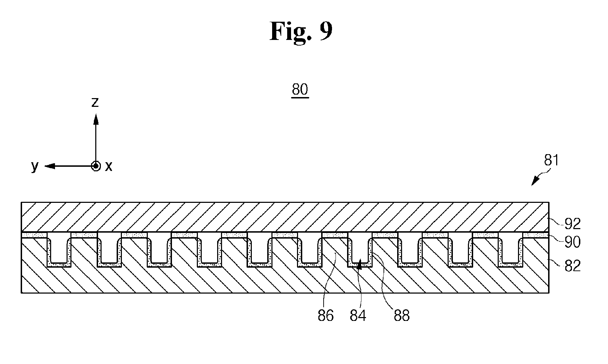

Fig. 7 is a perspective view illustrating a reformer according to another embodiment of the present invention. Fig. 8 is a partial exploded perspective view of the reformer of Fig. 7. Fig. 9 is a cross-sectional view of the reformer of Fig. 7.

Referring to Figs. 7 to 9, a reformer 80 has the same basic structure with the reformer in the previous embodiment.

Hereinafter, descriptions will focus on a difference from the reformer in the previous embodiment.

First, the reformer 80 has a plurality of channels 84 as a containing space for a catalyst formed inside a first metal plate 82 of a reactor body 81.

The channels 84 are formed by a plurality of ribs 86 that are disposed on the first metal plate 82 with a specific gap. One end of each of the channels 84 is open, and an aperture 84a is formed so that a catalyst can be inserted there through.

In the present embodiment, a catalyst layer 88 is formed inside each channel 84, at lateral surface of each rib 84, on the first metal plate 82.

A second metal plate 92 is disposed over the first metal plate 82, covers the channels 84, and is bonded with the first metal plate 82 through a bonding portion 90. In addition, the second metal plate 92 is larger than the first metal plate 82.

At one lateral end of the first metal plate 82, a finishing unit 94 is provided which covers the aperture 84a and is fixed to the first metal plate 82. The finishing unit 94 has a bar-shaped block 96 in which the first and second metal plates 82 and 92 are formed long in a short-axis direction y.

The block 96 is fixed to the first and second metal plates 82 and 92 through laser-welding or its equivalent, and thus a welding portion 98 is formed between the block 96 and the first and second metal plates 82 and 92.

When the size of the second metal plate 92 is determined, the size of the first metal plate 82 and the size of the block 96 have to be taken into account. Front ends of the ribs 86 facing the block 96 are disposed closer inside than the front end of the first metal plate 82. Therefore, after the reactor body 81 is formed by combining the first and second metal plates 82 and 92 and the block 96, the channels 84 can be connected with one another.

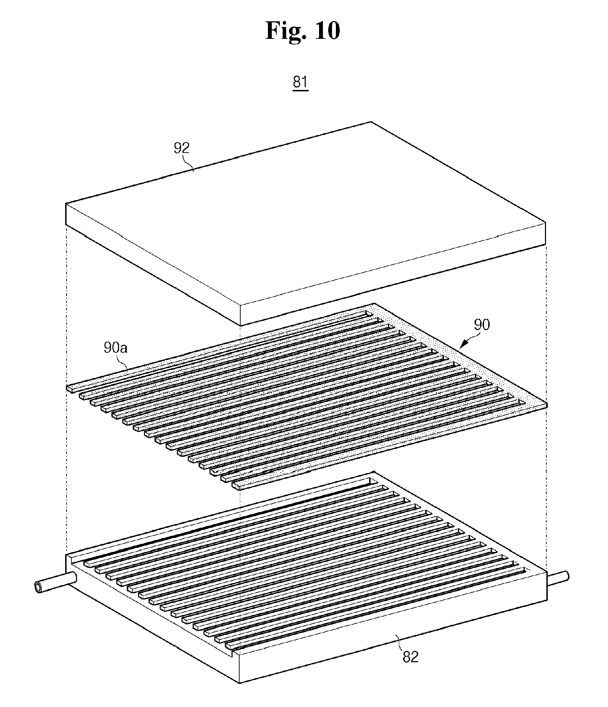

As shown in Fig. 10, the reactor body 81 also can bond the first and second metal plates 82 and 92 through a metal thin plate 90a of the bonding portion 90 disposed at upper surfaces of the ribs 86 on the first metal plate 82 and upper surfaces of edges of the first metal plate 82.

Here, the metal thin plate 90a is also bonded through the thermal treatment process using the brazing method as described above. After the first and second metal plates 82 and 92 are bonded, a catalyst is supplied to the channels 84 through the aperture 84a, thereby forming the catalyst layer 88.

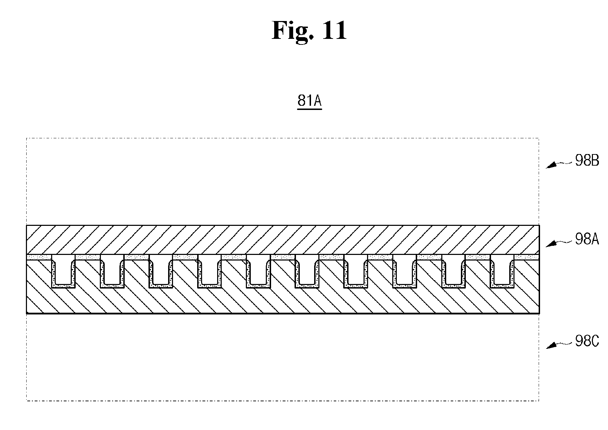

Furthermore, as shown in Fig. 11, in the present embodiment, a reformer 81A may include a plurality of reactor bodies 98A, 98B, and 98C.

According to abovementioned embodiments of the present invention, a plate-type reformer is constructed in such a way that a pellet-shaped catalyst is filled inside a reactor body formed by bonding first and second metal plates using a brazing method. Therefore, a whole system can be compact, and a laminating structure can be used, thereby improving thermal transfer efficiency of the reformer as a whole.

In addition, since a catalyst layer is formed inside the reactor body after the reactor body is formed using the brazing method, the catalyst layer of the reactor body is not separated due to heat in a brazing bonding process for the plates.

## Claims

1. A plate-type reactor body for a fuel cell system comprising:
an inner space containing a catalyst layer including a catalyst for promoting a reforming reaction,
a plurality of plates, and
a bonding portion between the plates
**characterized in that** the reactor body further comprises
an aperture adapted for insertion of the catalyst and a finishing unit adapted for finishing and sealing the aperture.

2. The reactor body of claim 1, wherein the finishing unit is fixed to the plates by welding.

3. The reactor body of claim 1,
wherein the plates comprises:
a first metal plate which has a concave portion to form the inner space; and
a second metal plate which covers the concave portion and comes in close contact with the first metal plate, and
wherein the aperture is formed by cutting a portion of a wall of the first metal plate disposed along edges of the concave portion.

4. The reactor body of any of the preceding claims, wherein the finishing unit is a block of corresponding shape to the shape of the aperture.

5. The reactor body of claim 4, wherein the finishing unit is formed by a bar-shaped block.

6. The reactor body of claim 1,
wherein the plates comprises:
a first metal plate which has a plurality of channels to form the inner space; and
a second metal plate which covers the plates and comes in close contact with the first metal plate, and
wherein the channels are formed by a plurality of ribs disposed at one side of the first metal plate with a specific gap, and the aperture is formed by opening one lateral end of each channel.

7. The reactor body of claim 1, wherein the bonding portion comprises a metal thin plate which is disposed between border surfaces of the plates.

8. The reactor body of claim 7, wherein the metal thin plate is made of a material having a melting point lower than that of the plates.

9. The reactor body of claim 1, wherein the plates are made of stainless steel or aluminum.

10. The reactor body of claim 1, wherein the catalyst layer is formed by a pellet-shaped catalyst.

11. A reformer including a plurality of reactor bodies according to any of the claim 1 to 10.
